(19) Europäisches Patentamt
European Patent Office
Office européen des brevets

(11) **EP 2 727 180 B1**

(12) **EUROPÄISCHE PATENTSCHRIFT**

(45) Veröffentlichungstag und Bekanntmachung des Hinweises auf die Patenterteilung:
**09.09.2015 Patentblatt 2015/37**

(21) Anmeldenummer: **12729333.0**

(22) Anmeldetag: **13.06.2012**

(51) Int Cl.:
**H01Q 1/12** (2006.01)

(86) Internationale Anmeldenummer:
**PCT/AT2012/000167**

(87) Internationale Veröffentlichungsnummer:
**WO 2013/003872 (10.01.2013 Gazette 2013/02)**

(54) **VERFAHREN UND VORRICHTUNG ZUR BESTIMMUNG UND SPEICHERUNG VON POSITION UND AUSRICHTUNG VON ANTENNENSTRUKTUREN**

METHOD AND APPARATUS FOR DETERMINING AND STORING THE POSITION AND ORIENTATION OF ANTENNA STRUCTURES

PROCÉDÉ ET DISPOSITIF POUR DÉTERMINER ET ENREGISTRER LA POSITION ET L'ORIENTATION DE STRUCTURES D'ANTENNES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.07.2011 AT 9662011**

(43) Veröffentlichungstag der Anmeldung:
**07.05.2014 Patentblatt 2014/19**

(73) Patentinhaber: **Neubauer, Thomas**
**1070 Wien (AT)**

(72) Erfinder: **Neubauer, Thomas**
**1070 Wien (AT)**

(74) Vertreter: **Grünecker Patent- und Rechtsanwälte PartG mbB**
**Leopoldstraße 4**
**80802 München (DE)**

(56) Entgegenhaltungen:
**DE-A1-102005 040 414    US-A1- 2009 021 447**

**Beschreibung**

Die vorliegende Erfindung betrifft ein Verfahren und eine Vorrichtung zur Ermittlung von Position und Ausrichtung von Antennenstrukturen.

Ein Mobilfunksystem beinhaltet typischerweise eine oder mehrere Basisstationen, die möglicherweise über andere Netzwerkelemente wie zum Beispiel Vermittlungsstellen oder Gateways miteinander verbunden sind. Jede dieser Basisstationen versorgt funktechnisch ein bestimmtes Gebiet - eine sogenannte Funkzelle. Endgeräte innerhalb einer Zelle bauen eine Verbindung mit dem Mobilfunksystem über eine oder mehrere Antennen einer oder mehrerer Basisstationen auf. Die Antennen sind üblicherweise auf möglichst hohen Strukturen angebracht, beispielsweise auf Dächern von Häusern und Gebäuden, Türmen oder eigenen Masten.

Die Ausrichtungen von Antennen und Antennenstrukturen kann eine bedeutende Auswirkung auf die Versorgung, Qualität, Kapazität und die maximalen Datenraten eines Mobilfunksystems haben. Der Einfluss der Antennenausrichtung auf die Funkversorgung ist beispielsweise in Esmael Dinan et al, "UMTS Radio Interface System Planning and Optimization", Bechtel Telecommunications Technical Journal, December 2002, Vol 1, No 1, PP 1-10 oder in Jaana Laiho, 'Radio Network Planning and Optimization for UMTS", Second Edition, John Wiley and Sons 2006, Chapter 9 (Advanced Analysis Methods and Radio Access Network Autotuning), PP 505-569 beschrieben.

Durch die Optimierung der Antennenausrichtung in Funksystemen ergibt sich eine Reihe von Vorteilen, wie zum Beispiel eine Verbesserung der Versorgung, eine Reduktion der Störaussendung (Interferenz), eine Erhöhung der Reichweite und/oder eine Erhöhung der Kapazität eines Mobilfunksystems.

Um eine entsprechende Optimierung dieser Antennenausrichtungen, sowohl im Sende- als auch im Empfangsfall, durchführen zu können, ist es notwendig die entsprechenden Kenngrößen (z.B. empfangene Signalleistung, Interferenz, Datenrate, Bitfehlerrate) am Empfänger zu bestimmen. Im Allgemeinen gibt es dazu verschiedene Möglichkeiten zur Messung, wie beispielsweise Messfahrten, Referenzempfänger-Messungen, Messungen der Endgeräte die bei jedem Ereignis (Event), wie zum Beispiel Gesprächsaufbau, Handover, Wechsel der stärksten Versorgerzelle, etc. Die Messungen können während einer aktiven oder passiven Verbindung entsprechend dem jeweiligen standardisierten Verfahren durchgeführt werden. Heute werden überwiegend standardisierte Systeme wie zum Beispiel Global System for Mobile Communication (GSM), Universal Mobile Telecommunications System (UMTS) oder Long Term Evolution (LTE) für Mobilfunkübertragung eingesetzt. Eine Optimierung der Antennenausrichtung ist jedoch ein Problem, das bei allen Funksystemen auftreten kann, egal/gleich ob standardisiert oder proprietär.

Die Funkverbindungsrichtung, in die die Antennenstruktur zum Empfangsgerät, dem Benutzer sendet, nennt man Abwärtsstrecke (Downlink). Die umgekehrte Richtung, in der die Antennenstruktur auf der Empfängerseite ist und der Benutzer selbst sendet, nennt man wiederum Aufwärtsstrecke (Uplink).

In der Abwärtsstrecke, kann Aufgrund der Messungen, der erfassten Position der jeweiligen Messpunkte (z.B. mittels GPS Lokalisation bei Messfahrten), sowie der Position, Ausrichtung und Sendeleistung an der Sendeantenne, auf die Streckendämpfung des Mobilfunkkanals rückgeschlossen werden.

Die Empfangsleistung ergibt sich aufgrund der gesendeten Leistung in Richtung des Messpunktes. Somit ist sie sehr stark von der Ausrichtung der Antenne abhängig. Die Streckendämpfung (Ausbreitungseigenschaften des Mobilfunkkanals) ist von der Sendeleistung unabhängig und kann daher - bei Kenntnis der Sendeleistung, Antennenausrichtung und Struktur (Antennengewinn), sowie der gemessenen Empfangsleistung - bestimmt werden.

Basierend auf der so ermittelten Streckendämpfung kann eine Verbesserung der Ausrichtung der Antennenstruktur vorgenommen werden, welche die Verbesserung der Versorgung, Reduktion der Störungen (Interferenz), Erhöhung der Reichweite, Kapazität oder Datenrate, etc. zum Ziel hat.

Die Sendeleistung ist im System bekannt und relativ einfach abrufbar. Die Art der Antenne ist typischerweise bekannt, da alle Antennenhersteller entsprechende Antennendiagramme zur Verfügung stellen. Ebenso sind die Empfangswerte aufgrund der Messungen bekannt. Es ist daher von größter Bedeutung für die Optimierung von Antennenparametern, dass die ursprünglichen Daten zur Position und Ausrichtung in der für die Optimierung zugrunde liegenden Datenbank den tatsächlich im System implementierten Werten entsprechen.

Durch äußere Einflüsse, insbesondere durch Wind und Wetter, unsachgemäße Montage, oder dergleichen kann es beispielsweise immer wieder zu ungewollten Verschiebungen der Antennenausrichtung kommen.

Die Optimierung von Antennenparametern erfolgt sowohl beim Aufbau eines Mobilfunknetzes, beim Ausbau, also dem Hinzufügen neuer Sendeanlagen - wobei sowohl die neuen Antennenausrichtungen, als auch die Ausrichtungen der umliegenden Sendeanlagen optimiert werden können, sowie kontinuierlich im laufenden Betrieb um die Versorgung zu maximieren und die Störungen und Interferenzen aufgrund des ständig steigenden Datenverkehrs zu minimieren.

Zur Erfassung der Position und Ausrichtung von Antennenstrukturen und zur Speicherung in Datenbanken stehen gemäß dem Stand der Technik unterschiedliche Möglichkeiten zur Verfügung.

Eine gängige Methode zur Erfassung von Position und Ausrichtung von Antennenstrukturen ist die Vor-Ort Vermessung der Position mittels GPS System (x,y,z), die Bestimmung von Azimut Ausrichtung mittels Kompass, sowie die Ermittlung der Antennenneigung mittels Neigungswinkel Messgeräte.

Diese Methoden haben jedoch eine Reihe von praktischen Nachteilen, wie zum Beispiel:

- Zutrittsbeschränkungen für Sendeanlagen im Betrieb: Ohne Abschalten darf nicht in der unmittelbaren Nähe der Antennen gemessen werden. Weiters ist der Zutritt zu diesen Objekten teilweise nicht oder nur sehr begrenzt möglich, z.B. Strommasten, Privathäuser, Sendeanlagen die mit anderen Betreibern geteilt werden - was ein Abschalten aller Netze bedeuten würde, etc. Ein nachträgliches Vermessen ist daher kostenintensiv und dauert lange.

- Hohe Kosten: Selbst wenn Zutritt gestattet ist, erfordert die genaue Vermessung in der Regel qualifiziertes und damit teures Personal, z.B. Sicherheitsvorkehrungen zum Erklettern eines Mastes, etc.

- Fehler beim manuellen Ablesen: Durch das manuelle Ablesen von Messdaten sind Fehler möglich

- Störungen des Magnetfeldes in der unmittelbaren Nähe zu den metallischen Sendemasten: Ein Kompass zeigt daher im elektronmagnetischen Nahfeld einer Sendeanlage nicht immer Norden an. Dadurch ergeben sich sowohl systematische als auch zufällige Messfehler.

- Fehlerhafte Eingabe der Daten in die Datenbank: Die Daten werden fast ausschließlich manuell in eine Datenbank eingetragen. Selbst wenn somit die Daten richtig abgelesen werden stellt die manuelle Eingabe eine weitere Fehlerquelle dar. Dokument DE 102005040414 offenbart ein Verfahren zur Ermittlung der Ausrichtung einer Antenne, umfassend das Aufnehmen eines Digitalbildes zur Bestimmung der geographischen Strahlrichtung der Antenne

Der Erfindung liegt die Aufgabe zugrunde, ein Verfahren und eine Vorrichtung vorzulegen, mit dem bzw. mit der in effizienter Weise eine Ermittlung der Position und Ausrichtung einer Antennenstruktur ermöglicht wird.

Dies wird erfindungsgemäß durch das Berechnen der Antennenausrichtung basierend auf Merkmalen des aufgenommenen Digitalbildes der Antenne und weiteren Daten, die aus einem von der Antenne entfernten Messort messbar sind.

Dadurch wird eine Ausrichtungsmessung ohne direkten Zugriff auf die Antenne ermöglicht. Erfindungsgemäß wird ein Verfahren zur Ermittlung der Ausrichtung einer Antenne bereitgestellt das die folgenden Schritte umfasst: Aufnehmen eines Digitalbildes einer Antenne mit einer Kamera an einem Messort, Bestimmen der relativen Position des Messortes bezüglich der Antenne, Bestimmen der Größe der Antenne und Berechnen der Ausrichtung der Antenne basierend auf Merkmalen des aufgenommenen Digitalbildes, der bestimmten relativen Position und der Größe der Antenne.

Erfindungsgemäß wird des Weiteren eine Vorrichtung zur Ermittlung von der Ausrichtung einer Antenne bereitgestellt mit einer Ausrichtungsrecheneinheit zum Ermitteln von der Ausrichtung einer Antenne basierend auf Merkmalen eines in einem Messort und mit einer Kamera aufgenommenen Digitalbildes der Antenne, der relativen Position des Messortes bezüglich der Antenne und der Größe der Antenne.

Das Bestimmen der relativen Position umfasst vorzugsweise eine Messung der Position des Messorts und eine Messung der Entfernung zwischen dem Messort und/oder eine Messung der Richtung in welcher die Entfernung gemessen wurde. Der Messort ist der Ort (Messpunkt, Messposition) an dem die Messung der relativen Position und die Aufnahme des Antennenbildes erfolgen.

Das Bestimmen der relativen Position kann beispielsweise weiter das Ausrichten einer Einrichtung zur Entfernungsmessung mit einer Anzeige zum Anzeigen des Zielobjekts so dass die Antenne auf der Anzeige angezeigt wird umfassen, wobei das Ausrichten durch einen Benutzer in dem Messort auszuführen ist. Das Bestimmen kann des Weiteren das Messen der Ausrichtung von der Einrichtung und der Entfernung zwischen der Einrichtung und der Antenne umfassen. Die Einrichtung kann beispielsweise ein Laser-basiertes Entfernungsmessgerät sein.

Ein Teil des Verfahrens und/oder eine Funktion der Vorrichtung nach einem der Ausführungsbeispiele kann das Markieren von vordefinierten Stellen der Antenne durch den Benutzer auf der Anzeige oder in dem aufgenommenen Digitalbild umfassen, wobei das Berechnen der Ausrichtung der Antenne basierend auf den Markierten Stellen und der gemessenen Entfernung und Ausrichtung der Einrichtung erfolgt. Die vordefinierten Stellen können beispielsweise die Ecken einer Rechteck-förmigen Antenne sein, und/oder eine Mehrzahl Punkte auf den Kanten des Antennenumrisses. Der Benutzer kann diese mittels eines Kursors markieren. Dem Benutzer kann alternativ auf der Anzeige der Einrichtung ein Rahmen angezeigt werden, dessen Größe verstellbar ist. Der Benutzer kann dann die Form und die Größe des Rahmens anpassen und die Antenne mit dem Rahmen umrahmen.

Die Merkmale des Digitalbildes können vorbestimmte Stellen (und/oder ihre zueinander relative Position) der in dem Bild aufgenommenen Antenne sein und das Berechnen der Ausrichtung der Antenne durch eine Koordinatentransformation erfolgen.

Das Bestimmen der Größe der Antenne umfasst zweckmäßigerweise Extraktion der technischen Daten der Antenne aus einer Datenbank basierend auf dem Bild der Antenne und/oder auf der Position der Antenne und/oder auf einer Benutzereingabe.

Die berechnete Ausrichtung der Antenne und/oder des aufgenommenen Bildes können in eine Datenbank gespeichert werden. Diese kann ein Teil der erfindungsgemäßen Vorrichtung sein, oder kann mit der Vorrichtung verbunden werden (über ein Kabel oder eine Funkverbindung).

Die Position des Messortes kann durch einen GPS Empfänger oder anderen Methoden ermittelt werden. Beispielsweise kann die Position auch manuell auf einer Karte markiert uns somit Referenzpunkte und Position eingegeben werden kann, bzw. kann ein Messort mit bekannten Koordinaten gewählt werden. Der GPS Empfänger kann ein Teil der erfindungsgemäßen Vorrichtung sein, oder die Vorrichtung kann einen Anschluss zum Anschließen des GPS Empfängers enthalten.

Die vorliegende Erfindung kann mittels eines auf einem Computer laufbaren Programms implementiert werden. Das Programm führt die Berechnung der Ausrichtung der Antenne aus. Die Aufnahme des Bildes, die Positionsmessung, und/oder die Entfernungsmessung können durch externe Geräte ausgeführt werden und die so ermittelten Daten können dem Programm bereitgestellt werden. Die Größe (Abmessungen) der Antenne kann auch aus einer externen Datenbank dem Programm zur Verfügung gestellt werden.

Die obengenannten Messgeräte können jedoch in Übereinstimmung mit der Erfindung auch mit dem Computer verbunden werden und damit ein Messsystem bilden.

Die erfindungsgemäße Vorrichtung kann jedoch auch einige der obengenannten Komponenten umfassen und mit anderen verbindbar sein.

Nach einem weiteren Ausführungsbeispiel wird ein Computerprogramm bereitgestellt, das die Merkmale des erfindungsgemäßen Verfahrens implementiert. Das Programm kann auf einem Speichermedium gespeichert werden, zum Beispiel auf einer optischen Disk (CD, DVD, BD, etc.), auf einer Festplatte, auf einem USB-Stick, oder ähnlich.

Weitere Einzelheiten, Vorteile und Merkmale der Erfindung ergeben sich aus der folgenden Beschreibung und den Zeichnungen, auf die bezüglich der Offenbarung aller nicht im Text beschriebenen Einzelheiten ausdrücklich verwiesen wird.

Es zeigen:

Figur 1    eine Koordinatentransformation

Figur 2    schematisch eine Abwärtsstrecke einer Funkübertragung mit einem Sendemasten, eine 3-Sektor Konfiguration mit einer Antennenausrichtung, dazugehörigem Antennenrichtdiagramm, und einem Empfänger,

Figur 3    ein Beispiel einer erfindungsgemäßen Vorrichtung zur Ermittlung der Ausrichtung von Antennen,

Figur 4    schematische Darstellung einer Antennenstruktur montiert auf einem Masten, wo anhand der Verzerrung der Bildpunkte vom Referenzpunkt aus (Eckpunkte der Antennenstruktur) die Ausrichtung ermittelt werden kann und

Figur 5    ein Beispiel der logischen Funktionsblöcke in Übereinstimmung mit der vorliegenden Erfindung.

Die Erfindung betrifft ein Verfahren und eine Vorrichtung zur Ermittlung von Ausrichtung von Antennenstrukturen, sodass eine Optimierung und somit eine Verbesserung der Versorgung, eine Erhöhung der Anzahl der versorgbaren Benutzer, eine Steigerung der Datenraten und eine Steigerung der Kapazität erzielt werden kann. Die Position der Antenne kann auch ermittelt werden.

Insbesondere wird ein Verfahren und eine Vorrichtung zur Ermittlung und automatischen Speicherung der Position und Ausrichtung von Antennenstrukturen bereitgestellt, sodass eine Optimierung und somit eine Verbesserung der Versorgung, eine Erhöhung der Anzahl der versorgbaren Benutzer und eine Steigerung der Kapazität erzielt werden kann. Die Ermittlung der Ausgangsposition und Orientierung der Antennenstrukturen kann automatisiert vom Straßenniveau aus erfolgen, ohne dass kostenintensives Aufsuchen und Vermessen der Antennenposition und -ausrichtung direkt am Errichtungsstandort erforderlich sind, und die Speicherung der Daten automatisiert erfolgt.

Es können so die absolute Position des Referenzpunktes (Messpunktes), die Orientierung der Messvorrichtung mit Blick zur Antennenstruktur, die räumliche Entfernung zwischen Messpunkt und Antenne, die tatsächlichen Abmessungen der Antenne, und Bildmesspunkte an der Antenne an sich für Ermittlung der Position und Ausrichtung der Antennenstruktur zu Grunde gelegt werden.

Basierend auf den Bildmesspunkten der Antennenstruktur, den bekannten Abmessungen der Antenne, und der Verzerrung der Antennenstruktur vom Betrachtungspunkt (Referenzpunkt) aus wird erfindungsgemäß die Orientierung der Antennenstruktur ermittelt.

Sowohl Position (x,y,z) und Ausrichtung (Azimut, Neigung und Verdrehung) der Antenne können anhand des erfindungsgemäßen Verfahrens bzw. der erfindungsgemäßen Vorrichtung errechnet und mittels automatischer elektronischer Datenerfassung und Übermittlung in eine Datenbank gespeichert werden, von wo sie für weitere Verwendungen zur Verfügung stehen, beispielsweise für die Verifizierung des Messergebnisses auf einer digitalen Karte, z.B. Google Earth, etc.

Die erfindungsgemäße Technik hat einige Vorteile gegenüber den herkömmlichen Techniken. Sie ist uneingeschränkt von den Ausbreitungsverhältnissen elektromagnetischer Wellen und somit für städtische bis ländliche Umgebungen gleich anwendbar. Es gibt keinerlei Annahmen über das Richtdiagramm der Antennengruppe, sodass keinerlei Beschränkungen bestehen. Es gibt keinerlei Annahmen über den Frequenzbereich in dem die Erfindung eingesetzt wird. Es gibt keine Annahmen über die Zugangstechnologie auf der Funkschnittstelle, sodass keinerlei Beschränkungen auf ein Frequenz-, Zeit- oder Codeduplex Verfahren bestehen.

Es werden keinerlei Annahmen über die Auflösung, oder Genauigkeit der Position und Ausrichtung getroffen, sodass keinerlei Einschränkungen vorliegen. Es werden keinerlei Einschränkungen bezüglich der Bestimmung des Referenzpunktes für die Messungen getroffen, also weder ob dieser mittels GPS oder ähnlicher Methoden bestimmt wird. Es werden keinerlei Annahmen zur Kalibrierung der Ausrichtung des Referenzpunktes sowohl in horizontaler (Azimut) als auch vertikaler (Neigungswinkel) Ebene getroffen, sodass keinerlei Einschränkungen vorliegen. Es werden keinerlei Annahmen über die Art und Weise der Entfernungsmessung getroffen, sodass keinerlei Einschränkungen vorliegen. Es können beispielsweise verschiedene Methoden verwendet werden, wie optische Interferometrie, Laufzeitmessungen, etc. Es werden keinerlei Einschränkungen getroffen, welche Methode zur Erstellung eines Bildes der Antennenstruktur verwendet wird. So kann beispielsweise ein integrierter Fotosensor verwendet werden, aber auch eine handelsübliche digitale Spiegelreflexkamera, oder eine kostengünstige Kompaktkamera. Es werden keinerlei Einschränkungen getroffen welche Methoden der digitalen Bildverarbeitung, Fotogrammetrie, Koordinatentransformationen, Mustererkennung oder ähnliche verwendet werden um die Ausrichtung der Antennenstruktur aufgrund eines Bildes zu bestimmen.

Es werden keinerlei Annahmen über die Anzahl der Messpunkte für die Bestimmung der Ausrichtung der Antennenstruktur getroffen. Es werden keinerlei Annahmen über die Auswahl der Messpunkte für die Bestimmung der Ausrichtung der Antennenstruktur getroffen. Es werden keinerlei Annahmen über die Art der Datenbankstrukturen der zu speichernden Positions- und Ausrichtungsdaten getroffen. Es werden keinerlei Annahmen getroffen welche Daten erfasst und gespeichert werden, sodass keinerlei Einschränkungen vorliegen. Es werden keinerlei Annahmen über die Art der Schnittstellen für die Übermittlung der Daten an die Datenbank getroffen, sodass keinerlei Einschränkungen vorliegen. Es werden keinerlei Annahmen über die Art der Geo-Referenzierung der Positionsdaten der Antennenstruktur getroffen.

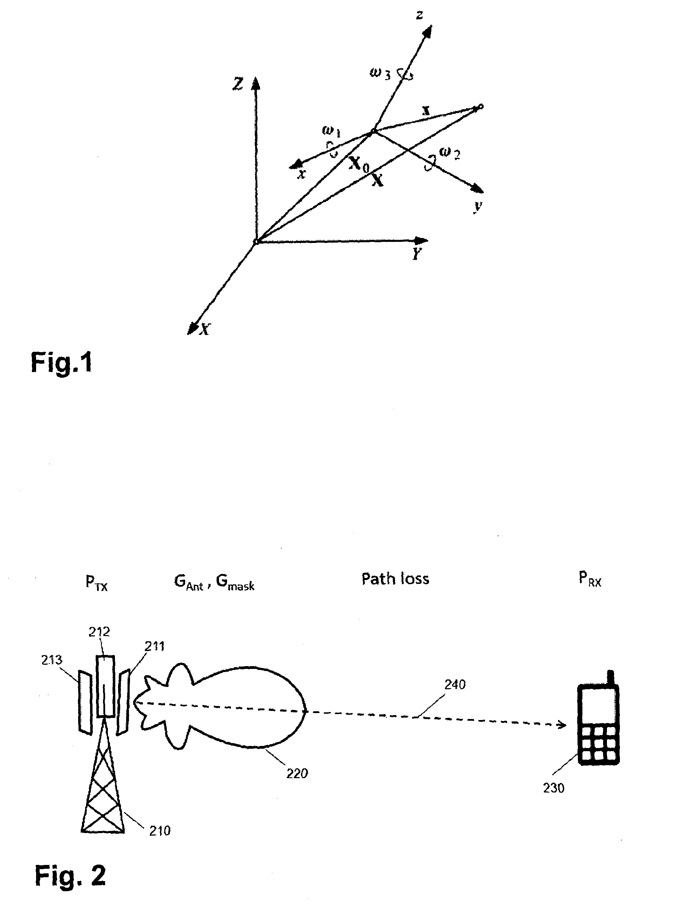

In Fig. 2 sind die wesentlichen Komponenten zur Bestimmung der Streckendämpfung (pathloss) dargestellt, wobei sich diese wie folgt berechnet:

$$Pathloss_{sector} = P_{TX} - P_{RX} + G_{Ant} - G_{mask\ f\{Antennen\ Ausrichtung\}}$$

Es wird dabei die Leistung $P_{TX}$ von Antenne 211 mit dem Antennengewinn $G_{Ant}$ in Richtung 240 des Empfängers 230 gesendet. Aufgrund der Position und Ausrichtung der Antenne 211 relativ zur Position vom Empfänger 230, in Kombination mit dem Antennenrichtdiagramm 220 ergibt sich eine richtungsabhängige Abstrahlcharakteristik und ein Gewinn $G_{mask\ f\{Antennen\ Ausrichtung\}}$. Die Leistung am Empfänger 230 wird gemessen und ist, so wie die Position des Empfängers (z.B. GPS, verschiedene andere Methoden lt Stand der Technik) verfügbar (z.B. Meßfahrten, geo-lokalisierte Mobile Measurements, etc.). Dadurch kann die Antennen und Leistungs- unabhängige Streckendämpfung errechnet werden die für eine nachfolgende Optimierung der Ausrichtung der Sendeantenne herangezogen werden.

Wesentlich für die korrekte Bestimmung der Streckendämpfung sind Position und Orientierung der Sendeantenne 211. Ist diese falsch, so können die Ergebnisse der Optimierung minderwertig, oder schlicht falsch sein, sodass keine oder nur eine geringfügige Verbesserung erreicht werden kann. Bei falschen Ausgangswerten sind auch Verschlechterungen der Qualität und Kapazität des Mobilfunknetzes möglich.

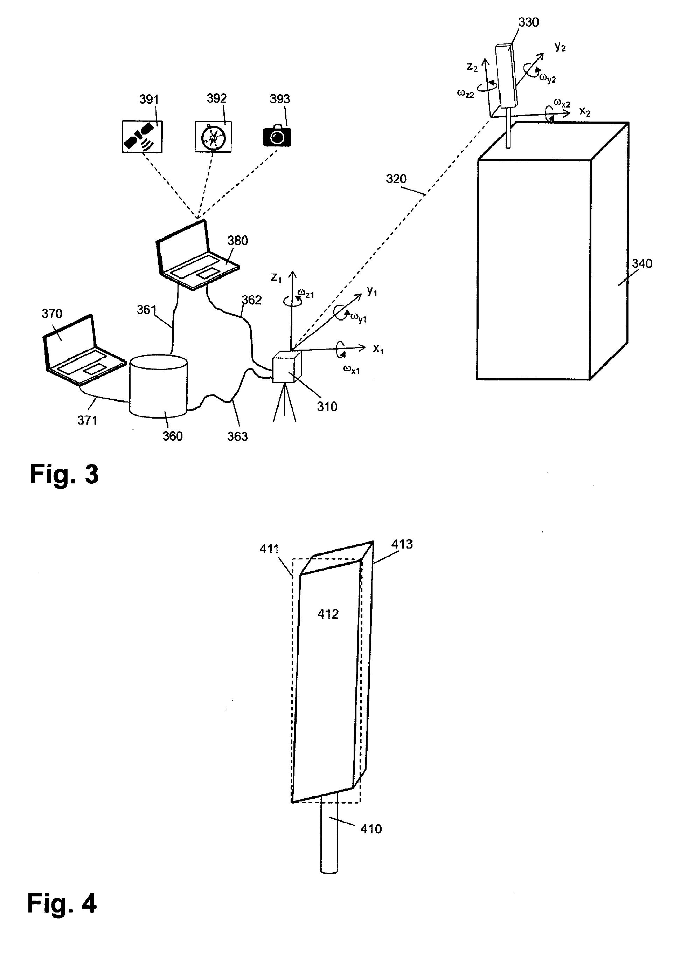

Fig. 3 zeigt schematisch den Messaufbau. Die Messapparatur 310 befindet sich an der Referenzposition. Diese Referenzposition wird mittels automatischer Kalibrierung der Position $(x_1, y_1, z_1)$ sowie der automatischen Ermittlung der Ausrichtung (Azimut, Neigung und Verdrehung, also $\omega_{x1}$, $\omega_{y1}$, $\omega_{z1}$) während der Messung am Zielobjekt 330 ermittelt.

Die Messapparatur 310 beinhaltet technische Vorrichtungen zur Bestimmung der Position $(x_1, y_1, z_1)$, der Entfernungsmessung 320, zur Bestimmung der Ausrichtung (Azimuth, Neigung, Drehung) zum Zielobjekt $(\omega_{x1}$, $\omega_{y1}$, $\omega_{z1})$, sowie zum Erfassen von Bildern des Zielobjektes 330.

Vom Referenzpunkt ausgehend wird das Zielobjekt, die Antennenstruktur 330, welche sich möglicherweise auf einem Gebäude 340, oder einem Masten oder dergleichen befindet, vermessen. Mittels Abstandmessung 320 wird die Entfernung zum Zielobjekt bestimmt. Durch Position und Ausrichtung bzw. Orientierung des Referenzpunktes in Richtung Zielobjekt $(\omega_{x1}$, $\omega_{y1}$, $\omega_{z1})$, sowie der präzisen Entfernungsmessung 320 zwischen Referenzpunkt und Zielobjekt, kann die Position der Antennenstruktur 330 eindeutig und genau bestimmt werden $(x_2, y_2, z_2)$.

Weiters erstellt die in der Messapparatur integrierte oder angeschlossene Kamera ein Bild des Zielobjektes und der darin enthaltenen Antennenstrukturen. Die Kamera muss dabei nicht direkt an die Messapparatur 310 angeschlossen sein, sondern kann die Bilder, die von der Position der Messapparatur aus aufgenommen werden, auch mittels Datenkarte oder Funkverbindung an die Recheneinheit übermitteln. Die Recheneinheit wiederum kann direkt in die Messapparatur 310 integriert sein, oder dieser angeschlossen sein, oder mittels anderer Datenübertragungsmethoden, z.B. Funkverbindung, Datenkarte, manuelle Eingabe der ähnliche, die benötigten Informationen erhalten.

Die Ausrichtung der Antennenstruktur wird daraufhin mittels digitaler Bildverarbeitung, Mustererkennung , Bildmessung oder ähnlichen Technologien ermittelt, wobei das von der Messapparatur 310 erfasste Bild als Grundlage dient. Diese Berechnung erfolgt beispielsweise über Methoden der dreidimensionalen konformen Koordinatentransformationen, wodurch die Rotationsparameter $(\omega_{x2}, \omega_{y2}, \omega_{z2})$ der Antennenstruktur ermittelt werden können. Daraus können die absolute Position und Orientierung der Antennenstruktur errechnet werden.

Die für die Berechnung notwendigen Programme werden entweder direkt in der Messapparatur 310, oder auf einem der Messapparatur angeschlossenen Rechner 380 ausgeführt. Dabei kann die Datenübertragung 362 zum Rechner 380 sowohl fest verbunden, oder aber auch über Funkschnittstellen, Datenkarten oder ähnliche erfolgen.

Die so ermittelte Orientierung und Ausrichtung werden, gemeinsam mit der Position der Antennenstruktur via elektronischer Datenverarbeitungsmethoden 361, 363 automatisch auf einem Datenträger 360 gespeichert. Das können sowohl in der Messapparatur integrierte Datenspeicher sein, als auch online Datenbanken, WebServer, etc. Die Datenübertragung 363 kann somit sowohl in der Messapparatur 310 integriert, leitungsgebunden oder über Funktechnologien ausgeführt sein.

Die so erfassten, ermittelten und gespeicherten Daten können in weiterer Folge via elektronischer Datenübertragungsmethoden 371, welche sowohl fest verbunden, aber auch über Funkschnittstellen ausgeführt sein können, in einer weiteren Softwareapplikation und/oder Hardware-Vorrichtung 370 gespeichert, verwaltet und dargestellt werden. Beispielsweise können die ermittelten Daten in der Applikation "Google Earth" auf aktuellem Kartenmaterial dargestellt und auf Plausibilität überprüft werden. Ein anderes Beispiel wäre die direkte Einbindung in Softwareapplikationen für Infrastruktur-Inventar, Datenbanken von Planungssoftware-Applikationen, etc.

Nach einem der Ausführungsbeispiele werden die Position und Ausrichtung auf Basis von Messungen ermittelt, die von einem Referenzpunkt (Messpunkt), dessen Position automatisch bestimmt werden kann, durchgeführt werden, wobei mittels Entfernungsmessungen vom Referenzpunkt zur jeweiligen Antennenstruktur und elektronischer Bildverarbeitung die absolute Position und Ausrichtung der Antennenstruktur bestimmt werden.

Weiters können die so ermittelten Daten zu Position und Ausrichtung der Antennenstruktur, via einer Schnittstelle, direkt in eine Datenbank (z.B. Online Datenbank, Webserver, oder in die Datenbanken von handelsüblichen Softwareprogrammen zur Planung und Optimierung von Mobilfunknetzen) übertragen werden, wobei eine absolute Geo-Referenzierung (z.B. GPS Daten, WGS 84, etc.) der Standorte zugrunde liegt.

Es ist entsprechend dem Stand der Technik bekannt, dass Positionsdaten mittels GPS gemessen werden können. Weiters sind Methoden bekannt, die eine automatische räumliche Orientierung einer Ebene, bzw. die Festlegung eines entsprechenden Koordinatensystems im Raum mittels Rotation und Elevation und Verdrehung (z.B. Gyrosensoren in Mobiltelefonen) ermöglichen. Weiters sind Methoden bekannt, die eine automatische Kalibrierung von Position und Ausrichtung eines Messgeräts an einem Messpunkt ermöglichen.

Es ist entsprechend dem Stand der Technik bekannt, dass Entfernungsmessungen mittels Laser Technologie hochgenau möglich sind. Ein Beispiel für eine laut dem Stand der Technik bekannte Methode und Vorrichtung zur Messung der Entfernung und des Neigungswinkels zu einem Zielobjekt ist der "Lasertype FG 21-LR" der Firma Riegl Laser Measurement Systems GmbH (vgl. Datenblatt zum Lasertype FG 21, frei verfügbar auf www.riegl.com). Dabei werden gepulste Lasersignale von der Vorrichtung ausgesendet. Basierend auf der Laufzeit des am Zielobjekt reflektierten Signals, welches von der Vorrichtung empfangen wird, wird die Entfernung bestimmt. Mittels eingebautem Neigungswinkel-Messgeräts wird die Inklination relativ zur horizontalen Ebene automatisch ermittelt. Damit lassen sich die Entfernung und Höhe eines Zielobjektes ermitteln. Eine solche Vorrichtung kann auch zur Ermittelung der Entfernung und Höhe einer Antenne in Übereinstimmung mit der vorliegenden Erfindung eingesetzt werden Es ist eine Reihe von Meßmethoden bekannt die der Entfernungsmessung zugrunde liegen und die auch für die vorliegende Erfindung eingesetzt werden können. Beispielsweise sind die folgenden Verfahren dafür geeignet Entfernungsdaten zu ermitteln:

- Fujima, S.Iwasaki and K.Seta , 'High-Resolution Distance Meter using Optical Intensity Modulation at 28 GHz' ,Meas.Sci.Tech., PP.1049-1052 (1998).

- G.Bazin and B.Journet, 'A New Laser Range-Finder Based on FMCW-Like Method', IEEE. Ins. Measu. Tech. Conference, Belgium, June 4-6,PP.90-93(1996).

- Amann et al, 'Laser ranging: a critical review of usual techniques for distance measurement', Optical Engineering, Vol. 40 No. 1, January 2001, PP.10-19 (2001); Society of Photo-Optical Instrumentation Engineers.

- K.Maatta, 'Profiling of hot surfaces by pulsed time of flight laser range finder techniques', Applied Optics, Vol. 32, No.27, 1993, PP. 5334-5342.

- Ari. Kilpela, 'Pulsed Time-of-Flight Laser Range Finder Techniques for Fast, High Precision Measurement Applications', OULU, Section 2.2.2, "TOF method", 2004. http://herkules.oulu.fi/isbn9514272625/isbn9514272625.pdf.

- Ki-Nam Joo, Yunseok Kim, and Seung-Woo Kim, "Distance measurements by combined method based on a femtosecond pulse laser," Opt. Express 16, 19799-19806 (2008), http://www.opticsinfobase.org/abstract.cfm?URI=oe-16-24-19799.

Zur Entfernungsmessung werden beispielsweise Laser verwendet die auf der Time-to-flight Methode basieren. Dabei wird von einer Apparatur ein kurzer optischer Impuls ausgesendet. Dieser wird am Zielobjekt reflektiert und die Zeit die bis zum Empfang des reflektierten Signals vergeht wird gemessen. Daraus wird die Entfernung ermittelt.

Eine weitere Methode zur Entfernungsbestimmung ist die Phasenversatzmethode. Dabei wird vom Sender ein mit einem Sinussignal moduliertes Lasersignal gesendet. Das reflektierte Licht wird am Empfänger mit dem gesendeten Signal verglichen, wobei der Phasenversatz direkt proportional dem Zeitversatz und somit der Wegstrecke ist.

Darüber hinaus gibt es eine Reihe weiterer Methoden, wo beispielsweise frequenzmodulierte Lasersignale, und verbesserte kombinierte Technologien eingesetzt werden.

Erfindungsgemäß wird das aufgenommene Bild der Antenne analysiert, um deren Ausrichtung zu ermitteln. Dafür können bekannte Verfahren aus Photogrammetrie, Mustererkennung und Bildmessung Berechnungsmethoden angewendet werden, welche die Verdrehung, Verschiebung und Skalierung von Bildkoordinaten der Abbildung eines Objektpunktes in einem Bild ermitteln können.

Ein Beispiel dafür ist die Ermittlung der Transformation eines Koordinatensystems (x,y,z) in ein anderes Koordinatensystem (X,Y,Z), wobei die Koordinatensysteme zueinander verdreht sind. Diese allgemein gültigen Methoden für dreidimensionale konforme Transformationen sind unter anderen in folgenden Referenzen ausführlich beschrieben:

- W. Niemeier, "Ausgleichsrechnung - Statistische Auswertemethoden", 2. Auflage, Abschnitt 10.2, ,Modelle für Koordinatentransformationen', Seite 343 ff, De Gruyten - Lehrbuch, Berlin/NewYork 2008, ISBN: 978-3-11-019055-7,

- Ghilani, C. D. and Wolf, P. R. (2007) "Coordinate Transformations, in Adjustment Computations: Spatial Data Analysis", Abschnitt 18.7 (Three Dimensional Conformal Coordinate Transformation), Seite 380ff, Fourth Edition, John Wiley & Sons, Inc., Hoboken, NJ, USA. doi: 10.1002/9780470121498.ch18.

Fig.1 zeigt den grundsätzlichen Ansatz wie ein solches Verfahren erfindungsgemäß einsetzbar ist. Im konkreten Beispiel befindet sich die Antenne in einem dreidimensionalen, rechtwinkeligen Koordinatensystem (x,y,z). Der Messpunkt, und somit der Bezugspunkt im Koordinatenursprung der Messung befindet sich im Koordinatensystem (X,Y,Z). Der Bezugspunkt im Koordinatensystem (x,y,z), welcher durch $X_0$ gekennzeichnet ist, kann beispielsweise ein Eckpunkt der Antenne sein, zu dem die Entfernung vom Messpunkt und Referenzpunkt der Messapparatur aus bestimmt wird.

Beide Koordinatensysteme sind zueinander verschoben ($X_0$, $Y_0$, $Z_0$), verdreht ($\omega 1$, $\omega 2$, $\omega 3$) und stehen über einen Maßstabsfaktor $m$ zueinander in Relation. Die Winkel $\omega 1$, $\omega 2$, $\omega 3$ geben somit die Verdrehung der Antenne bezogen auf den Messpunkt an. Es gilt:

$$\begin{bmatrix} X \\ Y \\ Z \end{bmatrix} = \begin{bmatrix} X_0 \\ Y_0 \\ Z_0 \end{bmatrix} + m \cdot \mathbf{R}(\omega_1, \omega_2, \omega_3) \begin{bmatrix} x \\ y \\ z \end{bmatrix},$$

wobei die Rotationsmatrix zerlegt werden kann in:

$$\mathbf{R}(\omega_1, \omega_2, \omega_3) = \mathbf{R}_1(\omega_1) \cdot \mathbf{R}_2(\omega_2) \cdot \mathbf{R}_3(\omega_3)$$

mit

$$\mathbf{R}_1(\omega_1) = \begin{bmatrix} 1 & 0 & 0 \\ 0 & \cos\omega_1 & \sin\omega_1 \\ 0 & -\sin\omega_1 & \cos\omega_1 \end{bmatrix}$$

$$\mathbf{R}_2(\omega_2) = \begin{bmatrix} \cos\omega_2 & 0 & -\sin\omega_2 \\ 0 & 1 & 0 \\ \sin\omega_2 & 0 & \cos\omega_2 \end{bmatrix}$$

$$\mathbf{R}_3(\omega_3) = \begin{bmatrix} \cos\omega_3 & \sin\omega_3 & 0 \\ -\sin\omega_3 & \cos\omega_3 & 0 \\ 0 & 0 & 1 \end{bmatrix}$$

Aus diesen Zusammenhängen, der Bestimmung der Abmessungen im Bild, dem Wissen über die tatsächlichen Abmessungen der Antenne, und einer minimalen Anzahl von Messpunkten zur Lösung des Gleichungssystems, kann die Rotationsmatrix bestimmt werden (vgl. die oben genannten Referenzen). Daraus können die Verdrehungswinkel der Antenne, bezogen auf das Bezugssystem des Messpunktes errechnet werden. Die Position $X_0$, $Y_0$, $Z_0$ entspricht der gemessenen absoluten Position der Antenne, welche beispielsweise als Eckpunkt der Antennenstruktur definiert sein kann.

Die oben genannten Verfahren sind nur ein Beispiel zum Bestimmen der Verdrehungswinkel der Antenne. Andere Verfahren sind möglich.

Die Abmessungen der Antennen sind typischerweise bekannt. Diese Daten werden vom Hersteller der Antennen in den Datenblättern ausgeführt und publiziert, wie zum Beispiel im Falle der Antennen des Herstellers Kathrein "Kathrein-Scala, '742215 - 65° Panel Antenna', Datasheet, frei verfügbar auf www.kathrein-scala.com".

**Ausführungsbeispiel einer integrierten Messvorrichtung**

Im folgenden Ausführungsbeispiel wird jener Fall beschrieben, bei dem die Berechnung der Daten direkt in der Messapparatur erfolgt:

Der Benutzer montiert die erfindungsgemäße Messvorrichtung auf einer Halterung (z.B. Dreibein) und schaltet diese ein. Automatisch wird die Position der Messvorrichtung anhand eines integrierten GPS Empfängers oder anderen Methoden ermittelt. Beispielsweise kann der Messpunkt auf einer georeferenzierten Karte eingetragen werden und somit die Koordinaten bestimmt. Die ermittelte Position kann auf einer grafischen Benutzeroberfläche angezeigt werden. Eine Softwareapplikation führt den Benutzer Schritt für Schritt durch den Messablauf.

Zuerst muss die Messapparatur in Richtung Messobjekt ausgerichtet werden. Das passiert manuell durch den Benutzer indem er entweder durch einen dafür vorgesehenen Sucher und einer entsprechenden Zieloptik, ähnlich einem Fernglas oder einer digitalen Spiegelreflexkamera, das anvisierte Messobjekt anvisiert und beispielsweise durch einen Marker oder ein Fadenkreuz identifiziert, oder die Darstellung erfolgt nicht durch einen Sucher bzw. eine Suchoptik, sondern direkt auf einem Bildschirm, ähnlich der Bildanzeige einer kompakten Digitalkamera, welche keinen eigenen Sucher hat.

Der Benutzer kann dabei einen oder mehrere Eckpunkte der Antenne als Referenzmesspunkte anvisieren. Diese Referenzmesspunkte bestimmen die absolute Position der Antenne. Es können auch mehrere Punkte definiert werden und daraus ein Mittelpunkt bestimmt werden. Die Punkte können gegebenenfalls direkt markiert werden um so für die Messauswertung automatisch am Bild erfasst zu werden. Weiters kann ein Fenster einstellbarer Größe definiert werden, welches die Antenne umrahmt. Damit können, mit entsprechender Bildverarbeitung die Rahmenstruktur der Antenne und die damit verbundenen Eckpunkte automatisch erkannt werden.

Ein weitere Möglichkeit ist, dass die Rahmenerkennung auf Farbverlaufsmuster beruht, sodass diese aufgrund eines inhomogenen Übergangs von der Antenne zur Umwelt, beispielsweise "grau" der Antenne auf "blau" des Himmels im Hintergrund automatisch bestimmt werden kann. Durch das Markieren eines Referenzpunktes innerhalb der Antennenstruktur, welcher in der späteren Bilderfassung auch gekennzeichnet ist, kann so die Referenzfarbe und damit die Rahmenerkennung, inklusive Erkennung der Eckpunkte automatisiert erfolgen. Weitere Techniken der Bildverarbeitung können zusätzlich oder selbstständig eingesetzt werden, wie zum Beispiel Kanten-Detektion, oder Objekterkennungsverfahren, die von charakteristischen Punkten (vordefinierten Merkmalen) Gebrauch machen. Beispiele für solche Techniken sind aus dem Stand der Technik bekannt, beispielsweise aus R. Jain et al., "Machine Vision", MCGraw-Hill, Inc., ISBN 0-07-032018-7, 1995 (vgl. insbesondere Kap. 15 für Objekterkennung, Kap. 5 für Kanten-Detektion, sowie Kap. 3 für Bildsegmentierung).

Zusammenfassend, die Vorliegende Erfindung erfasst aus dem aufgenommenen Digitalbild die räumliche Struktur (zum Beispiel geometrische Form, Farbe, usw.) der Antenne mittels eines der bekanten Bildverarbeitungsverfahren und/oder mit Unterstützung des Benutzers, der in dem Digitalbild vorbestimmte Merkmale der Antenne bezeichnen kann.

Sobald das Ziel erfasst ist, wird die Entfernungsmessung durchgeführt. Dabei werden zuerst die Ausrichtungsdaten erfasst, d.h. Ausrichtung (Azimut), Neigung und Verdrehung der Messvorrichtung in Richtung Messobjekt. Danach wird mittels Entfernungsmessung (z.B. long distance rangemeter mit einer Reichweite von ca 100m, 300m bis zu 1km - je nach Ausführung) die Distanz zum Referenzpunkt, z.B. einen unteren Eckpunkt am Messobjekt gemessen.

Aus den Referenzwerten der Position der Messvorrichtung und den ermittelten Messwerten wird die Position des Messobjektes eindeutig bestimmt.

Durch die Bestimmung eines Referenzpunktes am Messobjekt, beispielsweise durch ein Fadenkreuz in der Zieloptik oder am Display, ergibt sich ein Referenzpunkt für eine Bilderfassung. Dabei wird mit möglichst hoher Auflösung ein Bild des Messobjektes erstellt und gespeichert.

Der Benutzer hat die Möglichkeit per Fingersteuerung am berührungsempfindlichen Display das Bild zu vergrößern, bevor dieses gespeichert wird. Eine Konturerkennungssoftware errechnet die Konturen der Antennenstruktur und definiert Messpunkte an der Struktur, wobei der Benutzer Abstimmungsmöglichkeiten (z.B. Kontrasteinstellung, Anzahl und Position der Messpunkte) auch manuell definieren kann. Damit können Referenzpunkte wie beispielsweise Eckpunkte festgelegt werden.

Antennenstrukturen der beschriebenen Art werden vom Hersteller der Antennen genau dokumentiert und veröffentlicht, und sind somit dem Betreiber des Mobilfunknetzes bekannt. Aufgrund des strukturellen Wissens über die Antennenform (rechtwinkelige Systeme und bekannte Kantenlängen, etc), der Winkelrelationen am Bild, der Referenzposition, der Ausrichtung des Messapparates und der Entfernungsmessung kann die Ausrichtung des Koordinatensystems in dem sich die Antenne befindet, und somit die Orientierung der Antenne, mittels Methoden der konformen Koordinatentransformation errechnet werden. Die so errechneten Neigungswinkel können im Display angezeigt werden.

Die Speicherung der so gewonnen Daten ist der nächste Schritt. Dabei muss der Antenne eine Bezeichnung, zum Beispiel ein Name zugewiesen werden. Das kann manuell erfolgen, oder es können automatisch eindeutige Namen zugewiesen werden. Idealerweise könnten bestehende Referenzdaten direkt eingelesen werden, beispielsweise aus einer Inventar-Datenbank, einem Planungstool oder ähnlichen. So wären direkt der Antennenname, deren Typ, Herstellerdaten, etc. einlesbar und bekannt. Nach diesen Daten können dann die benötigten Abmessungen der Antenne festgestellt werden.

In einer besonders vorteilhaften Ausführung könnten mittels Bilderkennung und einer Datenbank an Antennen die Antennenmodelle auch direkt erkannt werden. Dafür wird in dem aufgenommenen Bild der Antenne die Antenne erkannt. Dabei kann der Benutzer durch manuelles Identifizieren der Außenkontur der Antenne Hilfsdaten liefern oder die Kanten und Ecken der Antenne werden automatisch erkannt. Die erkannte Antenne und/oder ihre Proportionen werden dann mit den Antennen in der Antennendatenbank korreliert und wodurch der Typ der Antenne ermittelt werden kann.

Weiters können die errechneten Werte - mittels automatischer Benutzerführung im Display der Vorrichtung - übernommen und in eine Datenbank (lokal, oder Webserver, oder eine andere externe Speichereinrichtung) übermittelt und gespeichert werden. Der Benutzer hat darüber hinaus die Möglichkeit, zusätzliche Details, sowie ein Bild der Antenne in der Datenbank mitspeichern zu können.

Zur raschen Übertragung der Daten kann die Messapparatur daher, je nach Ausführung auch ein Funkmodul (wireless modul) inkludieren, womit die Daten direkt online übertragen werden und in einem eingetragenen Webserver abgespeichert werden.

In einer vorteilhaften Ausführungsform verfügt die Messapparatur laut obigem Beispiel über ein grafisches Benutzerinterface, welches über einen berührungssensitiven Bildschirm bedient werden kann. Die Erfindung kann jedoch auch mit einer einfachen Anzeige (Display) ausgestattet werden und die Steuerung kann mittels dafür ausgestalteten Tasten und/oder anderen Bedienelementen erfolgen.

**Ausführungsbeispiel einer Berechnung außerhalb der Messapparatur**

Im folgenden Ausführungsbeispiel wird jener Fall beschrieben, bei dem die Berechnung der Ausrichtungsdaten außerhalb der eigentlichen Messgeräte erfolgt:

Der Benutzer verwendet die Messvorrichtung und schaltet diese ein. Die Messvorrichtung hat eine handliche Form und wird vom Benutzer frei gehandhabt, wie beispielsweise ein Fernglas. Der Benutzer richtet die Messvorrichtung in Richtung des Zielobjektes aus, wobei das durch eine entsprechende Zieloptik, einen Sucher mit integriertem Fadenkreuz, oder ähnlichem erfolgt.

Sobald der Benutzer das Zielobjekt anvisiert hat wird mittels Auslöser die Messung durchgeführt. Dabei wird mittels integrierter oder angeschlossener Positionsbestimmung die Position des Benutzers festgestellt. Weiters werden mittels integrierter oder angeschlossener Neigungsmessung die Höhendifferenz zwischen Benutzer und Zielobjekt ermittelt, und mittels integriertem oder angeschlossenem Kompass der Azimut in Messrichtung festgestellt. Darüber hinaus wird die Verdrehung bezüglich der vertikalen Achse mittels Niveaumessung festgestellt. Weiters wird die Entfernung zwischen Benutzer und Zielobjekt gemessen.

In einer besonders vorteilhaften Ausführung finden all diese Messungen, durch Betätigen des Auslösers, zeitgleich oder unmerklich zeitlich versetzt durchgeführt.

Zusätzlich wird ein Bild vom Zielobjekt, also der Antenne, erstellt, wobei der Benutzer durch den Sucher die Vergrößerung der im Bild dargestellten Antenne anpassen kann. Das kann beispielsweise durch einen zusätzlichen Betätigungsmechanismus erfolgen, der ein Vergrößern bzw. Verkleinern des Bildes, vergleichsweise einer digitalen Kompaktkamera, ermöglicht.

Die so ermittelten Daten werden mittels elektronischer Datenübertragung (leitungsgebunden, per Datenkarte, Funkübertragung oder ähnliche) an einen Rechner (Laptop, Tablet, sonstige Vorrichtung) übertragen. Auf dem Laptop (Tablet, etc) laufen jene Softwareapplikationen die zur erfindungsgemäßen Berechnung der absoluten Position und Ausrichtung der ZielAntenne notwendig sind.

Die Softwareapplikationen ermöglichen nun dem Benutzer das Bild zu vergrößern, Konturerkennungssoftware laufen zu lassen, Messpunkte zu definieren und Eigenschaften der Berechnung manuell zu beeinflussen.

Die errechneten Positionen und Neigungswinkel der Antennen können am Bildschirm des Rechners angezeigt und weiter verarbeitet werden.

Die Speicherung und weitere Verarbeitung der Daten kann wie im zuvor angeführten Beispiel erfolgen.

**Ausführungsbeispiel einer Berechnung am Rechner mit externen Modulen**

Ein weiteres Beispiel der Implementierung sieht vor, dass die Berechnung der Ausrichtung am Rechner 380 erfolgt, wobei die Position der Antenne 330 mittels Entfernungsmessung und Höhenmessung 320 erfolgt. Die notwendigen Daten zur Ausrichtung (Azimut und Verdrehung gegenüber der horizontalen Ebene) können gleichfalls manuell ermittelt werden, z.B. abgelesen von Kompass und Niveau-Messgerät 392. Die notwendige Positionsmessung kann ebenfalls über ein externes Positionsmessgerät, z.B. GPS Empfänger 391, erfolgen. All diese Messungen sollten an der Position der Entfernungsmessung 310 durchgeführt werden.

Die Bilderfassung kann dabei ebenfalls manuell über eine handelsübliche Kamera erfolgen 393, wobei die Position bei der Messung der des Entfernungsmessgeräts gleich oder zumindest sehr ähnlich sein sollte. Die Ausrichtungsdaten ergeben sich aufgrund des Zielobjektes automatisch und sind somit den Daten der Entfernungsmessung gleich. Daher kann das so gespeicherte Bildmaterial auch manuell an den Rechner (z.B. Speicherkarte einer Digitalkamera) übermittelt werden. Die Daten (Position, Orientierung zur Antenne, Entfernung, Bild) müssen im Anschluss manuell kombiniert werden, was anhand entsprechender Anleitungen in einer Softwareanwendung am Rechner 380 erfolgen kann.

Die weitere Berechnung, Verarbeitung und Speicherung der Daten wird durch Softwareapplikationen entsprechend obigem Ausführungsbeispiel durchgeführt.

Die Messapparatur verfügt in einer vorteilhaften Ausführungsform über eine Vorrichtung zur automatischen Positionsbestimmung, z.B. einen GPS Empfänger, der die Position automatisch bestimmt.

In einer vorteilhaften Ausführungsform verfügt die Messapparatur über eine Vorrichtung zur automatischen Erfassung der Ausrichtung (Azimut, Neigung, Verdrehung) der Messapparatur bezogen auf ein absolutes Referenz-Koordinatensystem (horizontale Ebene, vertikale Ebene normal stehend zur horizontalen Ebene, geographischer Norden).

In einer weiteren vorteilhaften Ausführung wird die Kalibrierung der Messapparatur 310 per Knopfdruck (z.B. auf einem Bedienknopf oder einem berührungsempfindlichen Display, etc.) automatisch durchgeführt.

Vorzugsweise verfügt die Messapparatur über eine Vorrichtung zur Entfernungsmessung, welche über eine Software gesteuert werden kann, bzw. wobei die Daten elektronisch ausgelesen werden können.

Die Messapparatur kann über eine Vorrichtung zur Erfassung eines digitalen Bildes des Zielobjektes (der Antenne) verfügen.

In einer vorteilhaften Ausführung verfügt die Messapparatur über eine integrierte Kamera, die hochauflösende Bilder vom Zielobjekt erstellen kann und der Benutzer die Vergrößerung beeinflussen kann.

Die Messapparatur verfügt vorzugsweise über Möglichkeiten der elektronischen Datenverarbeitung zum Austausch, Verarbeiten und Speichern der Messdaten.

In einer besonders vorteilhaften Ausführungsform können die Daten vom Messgerät über eine Funkschnittstelle an einen Rechner übermittelt werden, um dort gespeichert und/oder weiter verarbeitet zu werden.

Weiters kann die Schnittstelle 371 ein Interface zu bestehenden am Markt verfügbaren Funknetzplanungstools oder Optimierungstools darstellen, die dann jeweils auf einem Rechner (370) laufen würden.

In einer besonders vorteilhaften Ausführung können die Eigenschaften (Größe der Antennen, Abmessungen, etc.), Bezeichnungen und Namen der den Antennen zuzuordnenden Sektoren von einer Datenbank, z.B. Funknetzplanungstool vor der Messung importiert werden, sodass Messdaten den bestehenden Datensätzen zugeordnet werden können.

In einer besonders vorteilhaften Ausführung können die importierten Daten aus einer Datenbank mit den Messdaten verglichen und abgeglichen werden, sowie Reports über Abweichungen erstellt werden. Beispielsweise kann der Benutzer die in der Datenbank verfügbaren Daten auf deren Qualität überprüfen. Dabei werden die "Soll" Werte laut Datenbank gelesen, und mit den gemessenen "IST" Werten verglichen. Die "Soll" Werte hier können beispielsweise Werte sein, die durch ein Netzwerkoptimierungsverfahren berechnet, oder von dem Netzwerkbetreiber festgelegt worden sind. Die "Ist" Werte können dann beispielsweise die gemessenen Werte sein. Wesentliche Vorteile bestehen darin, dass keine weitere manuelle Eingabe zu den grundlegenden Antennendaten und Senderbezeichnungen gemacht werden müssen, eine rasche und effiziente Methode zur Überprüfung der Antennendaten geschaffen ist, und die Daten unmittelbar mit der Datenbank abgestimmt werden können.

In einer besonders vorteilhaften Ausführung können die Messergebnisse des Zielobjektes von mehreren unterschiedlichen Messpositionen und Referenzpunkten aus kombiniert und so gemeinsam ausgewertet werden. Wesentliche Vorteile bestehen dabei in der Verbesserung der Genauigkeit der Messung, einer verbesserten Präzision bzw Auflösung, sowie der Möglichkeit dreidimensionale Eigenschaften zu errechnen. Aufgrund mehrerer Messpunkte und digitaler Bilder aus verschiedenen Betrachtungswinkeln können beispielsweise auch 3D Projektionen der Antennen erstellt werden. Berechnungsmethoden für die Berechnungsmethoden von 3D Projektionen aus 2D Bildern finden sich beispielsweise in: I. Stamos and P. K Allen. Automatic registration of 2-D with 3-D imagery in urban environments. In ICCV, pages 731-737, 2001.

Diese 3D Modelle können in einer Datenbank gespeichert werden, sodass der Benutzer zu einem späteren Zeitpunkt die Antennenausrichtung aus verschiedenen Blickpunkten betrachten kann. Das ist insbesondere von großem Vorteil, weil sich ein Ingenieur so einen bestmöglichen Eindruck der Gesamtsituation machen kann.

Fig. 4 zeigt ein Beispiel für die Ermittlung der Ausrichtung der Antennenstruktur 412, welche auf dem Masten 410 montiert ist. Es ist bekannt wie die Antennenstruktur in der frontalen Ansicht aussieht, was eine rechtwinkelige Struktur 411 ergibt. Weiters sind aufgrund der Information über das Antennenmodell die Abmessungen der Antenne bekannt. Aufgrund der tatsächlichen Größe, der Ausrichtung und des relativen Betrachtungswinkels vom Messpunkt zur Antennenstruktur ergibt sich eine Verzerrung der Kontur wie in 413 dargestellt. Aus dieser verzerrten Kontur, einer Reihe von festgelegten Messpunkten, der Position des Referenzmesspunkts, der Orientierung der Messapparatur, und der Entfernung zum Zielobjekt kann nun die Ausrichtung der Antenne, bzw. die Verdrehung des Koordinatensystems indem sich die Antenne relativ zum Koordinatensystem des Betrachters befindet, ermittelt werden. Dies passiert beispielsweise mittels konformer dreidimensionaler Koordinatentransformationen. Daraus wiederum ergeben sich die Winkel für die Bestimmung der Orientierung der Antenne.

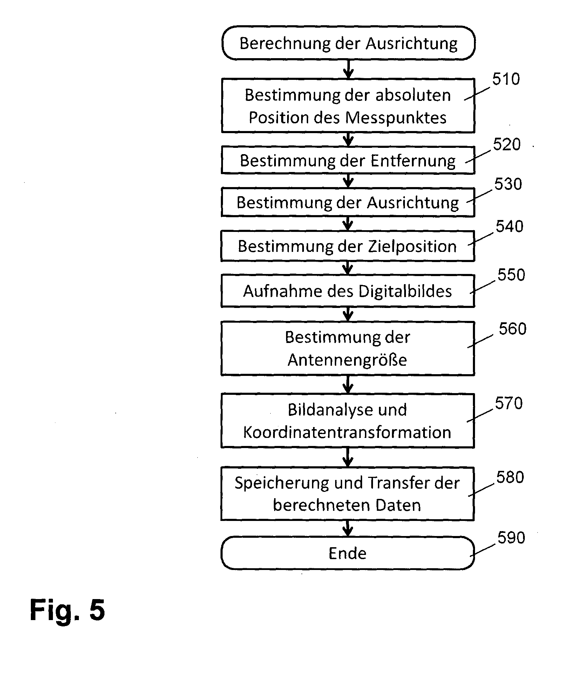

Fig. 5 zeigt beispielhaft einen Ablauf des erfindungsgemäßen Verfahrens zur Berechnung der Ausrichtung. Der Bestimmung der absoluten Position des Messpunktes 510 folgt die Bestimmung der Entfernung zum Zielobjekt 520. Die Bestimmung der Position des Messpunktes 510 kann dabei mittels GPS oder anderer Lokalisierungsmöglichkeiten erfolgen. Beispielsweise kann auch die Position auch manuell eingegeben werden kann, bzw. ein Messort mit bekannten Koordinaten gewählt werden. Für die Entfernungsmessung gibt es ebenfalls eine Reihe von Realisierungsmöglichkeiten, beispielsweise optische (z.B. Laser) als auch Mikrowellenbasierte Methoden. Nach der Bestimmung der Ausrichtung 530 vom Messpunkt zum Zielobjekt und den Resultaten der Entfernungsmessung 520, sowie der absoluten Position des Messpunktes 510 kann die absolute Position des Zielobjektes 540, bzw. einem Referenzpunkt am Zielobjekt, beispielsweise eines markierten oder automatisch festgelegten Eckpunktes bestimmt werden. Die Abläufe 510 bis 540 können dabei manuell nacheinander getätigt werden, oder aber auch automatisch per Knopfdruck an einer Vorrichtung erfolgen. Die Vorteile des gemeinsamen Ablaufes sind die einfache Handhabbarkeit und eine dafür notwendige kompakte Bauweise der Vorrichtung.

Weiters wird ein digitales Bild 550 des Zielobjektes aufgenommen und verarbeitet. Die Bestimmung der Antennengröße 560 kann aus einer Datenbank erfolgen, manuell vom Benutzer eingegeben werden oder aber auch aufgrund von Mustererkennung und Vergleichsdatenbank anhand von optischen Kriterien automatisch durchgeführt werden. Wesentlich dabei ist, dass die tatsächliche Baugröße der Antennenstruktur als Ergebnis geliefert wird.

Mittels der vorhandenen Informationen kann somit im Rahmen der Bildanalyse und damit einhergehenden Koordinatentransformation 570 begonnen werden. Basierend auf der Kombination aus Zielposition 540 und der Bildanalyse 570 kann somit die absolute Position der Antenne, als auch deren dreidimensionale Ausrichtung bestimmt werden.

Im Anschluss werden die Daten an ein Speichermedium gespeichert, welches im einfachsten Fall eine lokale Datenspeicherung sein kann, bis hin zur Synchronisation mit Online-Datenbanken im Internet, als auch eine spezielle Softwareapplikation zum Abgleich von gespeicherten Daten und gemessenen Daten. Letztere erlaubt beispielsweise auch eine statistische Erhebung der Genauigkeit und Güte der Datenqualität in der existierenden Datenbank.

Abschließend wird die Messung beendet 590. Das Verfahren in Figur 5 ist nur eine mögliche Ausführung der Erfindung. Die Reihenfolge der Schritte kann auch anders sein. Beispielsweise können insbesondere die Schritte 510-560 in einer beliebigen Reihenfolge ausgeführt werden, weil die gemessenen Werte erst im Schritt 570 zum Berechnen der Antennenausrichtung benötigt werden.

Zusammenfassend, die Bestimmung der Position und Orientierung von Basisstationsantennen im Mobilfunk ist für die Optimierung der Sendeparameter von großer Bedeutung. Es erfordert zeitintensiven und kostspieligen Aufwand, da direkt an der Antenne gemessen werden muss. Darüber hinaus ist der Zutritt zu den Antennen oftmals nicht möglich. Das wirkt sich sehr nachteilig auf die Genauigkeit der Daten aus, sodass die Optimierungsergebnisse, bei denen Antennenparameter geändert werden, stark darunter leiden. Mit dem neuen Verfahren und der vorgestellten Vorrichtung ist die rasche, genaue und kostengünstige Erfassung der Position und Ausrichtung der Sendeantenne möglich ohne dabei in der Nähe der Antenne messen zu müssen. Die neue Methode erlaubt es aus größerer Entfernung die absolute Position der Basisstationsantenne und deren Ausrichtung zu ermitteln. Dabei wird mittels automatischer Bestimmung der Koordinaten des Referenzpunktes (Messpunktes), Entfernungsmessung zur Zielantenne, Messung des Neigungswinkels, sowie der Ausrichtung der Messapparatur die absolute Position der Antenne bestimmt. Von einem vom Messpunkt aus aufgenommenen Bild wird mittels photogrammetrischen Vermessungsmethoden, dem Wissen über die absoluten Abmessungen der Antenne, sowie mathematischen Methoden der konformen Koordinatentransformation die Ausrichtung der zu vermessenden Basisstationsantenne bestimmt. Anwendungen sind die rasche, kostengünstige und hochwertige Ermittlung der Position und Orientierung von Antennenstrukturen.

## Patentansprüche

1. Verfahren zur Ermittlung der Ausrichtung einer Antenne, umfassend

   Bestimmen (510) der absoluten Position des Messortes,
   Aufnehmen (550) eines Digitalbildes einer Antenne mit einer Kamera an einem Messort,
   Bestimmen (520) der relativen Position des Messortes bezüglich der Antenne,
   Bestimmen (560) der Größe der Antenne und
   Berechnen (570) der Ausrichtung der Antenne basierend auf Merkmalen der bestimmten absoluten Position, des aufgenommenen Digitalbildes, der bestimmten relativen Position und der Größe der Antenne.

2. Verfahren nach Anspruch 1, wobei
   das Bestimmen (520) der relativen Position umfasst eine Messung der Position des Messorts und eine Messung der Entfernung zwischen dem Messort und der Antenne und/oder eine Messung der Richtung in welcher die Entfernung gemessen wurde,
   das Bestimmen (560) der Größe der Antenne umfasst Extraktion der technischen Daten der Antenne aus einer Datenbank basierend auf dem Bild der Antenne und/oder auf der Position der Antenne und/oder auf einer Benutzereingabe.

3. Verfahren nach Anspruch 1 oder 2, wobei das Bestimmen der relativen Position umfasst:

   Ausrichten einer Einrichtung zur Entfernungsmessung mit einer Anzeige zum Anzeigen des Zielobjekts so dass die Antenne auf der Anzeige angezeigt wird, wobei das Ausrichten durch einen Benutzer in dem Messort ausgeführt wird,
   Messen (530) der Ausrichtung von der Einrichtung und der Entfernung zwischen der Einrichtung und der Antenne,
   Markieren von vordefinierten Stellen der Antenne durch den Benutzer auf der Anzeige oder in dem aufgenommenen Digitalbild, wobei
   das Berechnen (570) der Ausrichtung der Antenne basierend auf den Markierten Stellen und der gemessenen Entfernung und Ausrichtung der Einrichtung erfolgt.

4. Verfahren nach einem der Ansprüche 1 bis 3, wobei die Merkmale des Digitalbildes vorbestimmte Stellen der in dem Bild aufgenommenen Antenne sind und das Berechnen (570) der Ausrichtung der Antenne durch eine Koordinatentransformation erfolgt.

5. Verfahren nach einem der Ansprüche 1 bis 4, des Weiteren umfassend Speichern (580) der berechneten Ausrichtung der Antenne und/oder des aufgenommenen Bildes in eine Datenbank.

6. Vorrichtung zur Ermittlung von der Ausrichtung einer Antenne, umfassend:

eine Ausrichtungsrecheneinheit (380) zum Ermitteln von der Ausrichtung einer Antenne (330) basierend auf Merkmalen eines in einem Messort und mit einer Kamera (393) aufgenommenen Digitalbildes der Antenne (330), der absoluten Position des Messpunktes, der relativen Position des Messortes bezüglich der Antenne und der Größe der Antenne.

7. Vorrichtung nach Anspruch 6, des Weiteren umfassend:

eine Einrichtung (310) zur Entfernungsmessung mit einer Anzeige zum Anzeigen des Zielobjekts so dass die Antenne (330) auf der Anzeige angezeigt wird, wobei die Einrichtung (310) durch einen Benutzer in dem Messort ausrichtbar ist und angepasst die Ausrichtung zu ermitteln und die Entfernung zwischen dem Messort und der Antenne zu messen.

8. Vorrichtung nach Anspruch 6 oder 7, des Weiteren umfassend einen GPS Empfänger (391) zum Ermitteln der Position des Messortes oder einen Anschluss zum Anschließen des GPS Empfängers.

9. Vorrichtung nach einem der Ansprüche 6 bis 8, des Weiteren umfassend eine Kamera (393) zum Aufnehmen des Digitalbildes der Antenne (330).

10. Vorrichtung nach einem der Ansprüche 6 bis 9, wobei die Merkmale des Digitalbildes vorbestimmte Stellen der in dem Bild aufgenommenen Antenne sind und die Ausrichtungsrecheneinheit (380) angepasst ist das Berechnen der Ausrichtung der Antenne durch eine Koordinatentransformation auszuführen.

## Claims

1. A method for determining the orientation of an antenna, comprising
   Determining (510) the absolute position of a measuring point,
   Recording (550) a digital image of an antenna with a camera at a measuring point,
   Determining (520) the relative position of the measurement location with respect to the antenna,
   Determining (560) the size of the antenna, and
   Calculating (570) the orientation of the antenna based on characteristics of the determined absolute position, the recorded digital image, the determined relative position and the size of the antenna.

2. A method according to claim 1, wherein
   the determination (520) of the relative position comprises a measurement of the position of the measuring point, and a measurement of the distance between the measuring point and the antenna and/or a measurement of the direction in which the distance was measured,
   the determination (560) of the size of the antenna comprises extraction of the technical specifications of the antenna from a database based on the image of the antenna and/or the position of the antenna and/or a user input.

3. A method according to claim 1 or 2, wherein determining the relative position comprises:

   Aligning of a device for distance measurement with a display for displaying the target object so that the antenna is displayed on the display, wherein the alignment is performed by a user in the measuring site,
   measuring (530) the orientation of the device and the distance between the device and the antenna
   Selection of predefined locations on the antenna by the user on the display or in the digital image captured, whereas
   the calculation (570) of the orientation of the antenna is based on the marked points and the measured distance and orientation of the device.

4. A method according to any one of claims 1 to 3, wherein the characteristics of the digital image are predetermined locations of the in the image recorded antenna, and the calculation (570) of the orientation of the antenna is done by a coordinate transformation.

5. A method according to any one of claims 1 to 4, further comprising the storage (580) of the calculated orientation of the antenna and/or the captured image to a database.

6. A device for determining alignment of an antenna, comprising:

an alignment processing unit (380) for determining alignment of an antenna (330) based on characteristics of a digital image recorded at a measuring point with a camera (393) of said antenna (330), the absolute position of the measuring point, the relative position of the measurement location with respect to the antenna and the size of the antenna.

7. The apparatus of claim 6, further comprising:

a device (310) for distance measurement with a display for displaying the target object so that the antenna (330) is displayed on the display, wherein the device (310) can be aligned by a user in the measuring point and adapted to determine the orientation and the distance to be measured between the point of measurement and the antenna.

8. Apparatus according to claim 6 or 7, further comprising a GPS receiver (391) for determining the position of the measurement location or a connector for connecting the GPS receiver.

9. Device according to one of claims 6 to 8, further comprising a camera (393) for receiving the digital image of said antenna (330).

10. Device according to one of claims 6 to 9, wherein the characteristics of the digital image are predetermined locations recorded in the picture of the antenna and the orientation of the image processing unit (380) is adapted to perform the calculation of the orientation of the antenna by a coordinate transformation.

**Revendications**

1. Procédé pour déterminer l'orientation d'une antenne, comprenant
la détermination (510) de la position absolue du site de mesure,
le relevé (550) d'une image numérique d'une antenne à l'aide d'une caméra sur un site de mesure,
la détermination (520) de la position relative du site de mesure par rapport à l'antenne,
la détermination (560) de la grandeur de l'antenne, et
le calcul (570) de l'orientation de l'antenne se basant sur des caractéristiques de la position absolue déterminée, de l'image numérique relevée, de la position relative déterminée et de la grandeur de l'antenne.

2. Procédé selon la revendication 1, d'après lequel
la détermination (520) de la position relative comprend la mesure de la position du site de mesure et une mesure de la distance d'éloignement entre le site de mesure et l'antenne, et/ou une mesure de la direction dans laquelle a été mesurée la distance d'éloignement,
la détermination (560) de la grandeur de l'antenne comprend l'extraction des données techniques de l'antenne à partir d'une banque de données en se basant sur l'image de l'antenne et/ou sur la position de l'antenne et/ou sur une saisie de l'utilisateur.

3. Procédé selon la revendication 1 ou la revendication 2, d'après lequel la détermination de la position relative comprend
l'orientation d'un dispositif pour la mesure de la distance d'éloignement avec un système de visualisation pour visualiser l'objet cible, de manière à ce que l'antenne soit visualisée sur le système de visualisation, l'orientation étant effectuée par un utilisateur sur le site de mesure,
la mesure (530) de l'orientation du dispositif et de la distance d'éloignement entre le dispositif et l'antenne, le marquage de points prédéfinis de l'antenne par l'utilisateur sur le système de visualisation ou dans l'image numérique relevée, le
calcul (570) de l'orientation de l'antenne s'effectuant sur la base des points marqués et de la distance d'éloignement mesurée et de l'orientation du dispositif.

4. Procédé selon l'une des revendications 1 à 3, d'après lequel les caractéristiques de l'image numérique sont des points prédéterminés de l'antenne relevée, dans l'image, et le calcul (570) de l'orientation de l'antenne s'effectue par une transformation de coordonnées.

5. Procédé selon l'une des revendications 1 à 4, comprenant, en outre, la mémorisation (580) de l'orientation calculée de l'antenne et/ou de l'image relevée, dans une banque de données.

6. Appareillage pour déterminer l'orientation d'une antenne, comprenant :

une unité de calcul d'orientation (380) pour déterminer l'orientation d'une antenne (330), en se basant sur des caractéristiques d'une image numérique de l'antenne (330) relevée à l'aide d'une caméra (393), sur la position absolue du point de mesure, sur la position relative du site de mesure par rapport à l'antenne et sur la grandeur de l'antenne.

7. Appareillage selon la revendication 6, comprenant en outre :

un dispositif (310) de mesure de distance d'éloignement avec un système de visualisation destiné à visualiser l'objet cible, de sorte que l'antenne (330) est visualisée sur le système de visualisation, le dispositif (310) pouvant être orienté par un utilisateur, sur le site de mesure, et étant adapté à déterminer l'orientation et la distance d'éloignement entre le site de mesure et l'antenne.

8. Appareillage selon la revendication 6 ou la revendication 7, comprenant, en outre, un récepteur GPS (391) pour déterminer la position du site de mesure, ou un raccord pour le raccordement du récepteur GPS.

9. Appareillage selon l'une des revendications 6 à 8, comprenant, en outre, une caméra (393) pour relever l'image numérique de l'antenne (330).

10. Appareillage selon l'une des revendications 6 à 9, dans lequel les caractéristiques de l'image numérique sont des points prédéterminés de l'antenne relevée sur l'image, et l'unité de calcul d'orientation (380) est adaptée à effectuer le calcul de l'orientation de l'antenne par une transformation de coordonnées.

**Fig.1**

$P_{TX}$   $G_{Ant}$ , $G_{mask}$   Path loss   $P_{RX}$

**Fig. 2**

**Fig. 3**

**Fig. 4**

```
      ┌────────────────────────────────┐
      │   Berechnung der Ausrichtung    │
      └────────────────────────────────┘
                     │
                     ▼                        510
      ┌────────────────────────────────┐
      │    Bestimmung der absoluten     │
      │    Position des Messpunktes     │
      └────────────────────────────────┘
                     │
                     ▼                        520
      ┌────────────────────────────────┐
      │   Bestimmung der Entfernung     │
      └────────────────────────────────┘
                     │
                     ▼                        530
      ┌────────────────────────────────┐
      │   Bestimmung der Ausrichtung    │
      └────────────────────────────────┘
                     │
                     ▼                        540
      ┌────────────────────────────────┐
      │   Bestimmung der Zielposition   │
      └────────────────────────────────┘
                     │
                     ▼                        550
      ┌────────────────────────────────┐
      │    Aufnahme des Digitalbildes   │
      └────────────────────────────────┘
                     │
                     ▼                        560
      ┌────────────────────────────────┐
      │       Bestimmung der           │
      │       Antennengröße            │
      └────────────────────────────────┘
                     │
                     ▼                        570
      ┌────────────────────────────────┐
      │       Bildanalyse und          │
      │   Koordinatentransformation    │
      └────────────────────────────────┘
                     │
                     ▼                        580
      ┌────────────────────────────────┐
      │  Speicherung und Transfer der   │
      │       berechneten Daten         │
      └────────────────────────────────┘
                     │
                     ▼                        590
      ┌────────────────────────────────┐
      │             Ende                │
      └────────────────────────────────┘
```

# Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005040414

**In der Beschreibung aufgeführte Nicht-Patentliteratur**

- **ESMAEL DINAN et al.** UMTS Radio Interface System Planning and Optimization. *Bechtel Telecommunications Technical Journal,* Dezember 2002, vol. 1 (1), 1-10
- Radio Network Planning and Optimization for UMTS. **JAANA LAIHO.** Advanced Analysis Methods and Radio Access Network Autotuning. John Wiley and Sons, 2006, 505-569
- **FUJIMA, S.IWASAKI ; K.SETA.** High-Resolution Distance Meter using Optical Intensity Modulation at 28 GHz. *Meas.Sci.Tech.,* 1998, 1049-1052
- **G.BAZIN ; B.JOURNET.** A New Laser Range-Finder Based on FMCW-Like Method. *IEEE. Ins. Measu. Tech. Conference, Belgium,* 04. Juni 1996, 90-93
- Laser ranging: a critical review of usual techniques for distance measurement. **AMANN et al.** Optical Engineering. Society of Photo-Optical Instrumentation Engineers, Januar 2001, vol. 40, 10-19
- **K.MAATTA.** Profiling of hot surfaces by pulsed time of flight laser range finder techniques. *Applied Optics,* 1993, vol. 32 (27), 5334-5342

- **ARI. KILPELA.** Pulsed Time-of-Flight Laser Range Finder Techniques for Fast, High Precision Measurement Applications. *OULU, Section 2.2.2, "TOF method,* 2004, http://herkules.oulu.fi/isbn9514272625/isbn9514272625.pdf
- **KI-NAM JOO ; YUNSEOK KIM ; SEUNG-WOO KIM.** Distance measurements by combined method based on a femtosecond pulse laser. *Opt. Express,* 2008, vol. 16, 19799-19806, www.opticsinfobase.org/abstract.cfm?URI=oe-16-24-19799
- Ausgleichsrechnung - Statistische Auswertemethoden. **W. NIEMEIER.** Abschnitt 10.2, ,Modelle für Koordinatentransformationen. De Gruyten - Lehrbuch, 2008, 343 ff
- Coordinate Transformations, in Adjustment Computations: Spatial Data Analysis. **GHILANI, C. D. ; WOLF, P. R.** Three Dimensional Conformal Coordinate Transformation. John Wiley & Sons, Inc, 2007, 380ff
- **R. JAIN et al.** Machine Vision. MCGraw-Hill, Inc, 1995
- **I. STAMOS ; P. K ALLEN.** Automatic registration of 2-D with 3-D imagery in urban environments. *ICCV,* 2001, 731-737